# EUROPEAN PATENT APPLICATION

(11) **EP 4 516 383 A1**
(43) Date of publication of application: **05.03.2025**
(21) Application number: 22940370.4
(22) Date of filing: 01.07.2022
(51) Int. Cl.: B01D 53/14, C25B 1/04, B04C 5/24, B04C 9/00, B01D 53/78, B01D 53/79, B01D 46/00

(54) **SYSTEM FOR CAPTURING AND RECYCLING CARBON DIOXIDE AND PRODUCING HYDROGEN FOR CEMENT MANUFACTURING FACILITY**

(30) Priority: 27.04.2022 KR 20220051955
(71) Applicant: Lowcarbon Co., Ltd., Seongjeon-myeon, Gangjin-gun Jeollanam-do 59205 (KR)
(72) Inventor: LEE, Cheol, Cheongju-si Chungcheongbuk-do 28709 (KR)
(74) Representative: M. Zardi & Co S.A.
(86) International application number: PCT/KR2022/009526
(87) International publication number: WO 2023/210876

(57) **Abstract**

The present invention relates to a system for capturing and recycling carbon dioxide and producing hydrogen for a cement manufacturing facility. An embodiment of the present invention is characterized by comprising: a preheater that has a plurality of stages of cyclones arranged in series in a vertical direction and receives and preheats a cement raw material; a calciner that calcines the cement raw material preheated by the preheater; a kiln that fires the cement raw material calcined in the calciner; an exhaust line, connected to the cyclones of the preheater, that discharges exhaust gas discharged from each of the calciner and the kiln to the outside; a reactor, disposed on the exhaust line, that receives the exhaust gas and reacts the exhaust gas with a basic alkali mixed solution to capture carbon dioxide in the exhaust gas, collect a reactant including the captured carbon dioxide, and separate a carbon dioxide reactant and a waste solution from the reactant; and a hydrogen generator that generates hydrogen gas by receiving the carbon dioxide reactant separated from the reactor.

## Description

### Technical Field

The present disclosure relates to a system for capturing and recycling carbon dioxide and producing hydrogen for a cement manufacturing facility. More particularly, the present disclosure relates to a system for capturing and recycling carbon dioxide and producing hydrogen for a cement manufacturing facility, the system being configured to capture and convert carbon dioxide in an exhaust gas into a carbon resource by using a basic alkali mixed solution and being also configured to produce hydrogen gas, thereby being capable of removing carbon dioxide in the cement manufacturing facility and also capable of recycling carbon dioxide such that carbon dioxide is converted into other useful materials.

### Background Art

Recently, most industries have proposed a plan to reduce greenhouse gas emissions according to a global carbon neutrality trend. Particularly, the cement industry, in which greenhouse gas emissions are high, is one of the fields that is attracting attention in the industry related to carbon neutrality.

Particularly, according to the 2017 report of the International Energy Agency (IEA), global cement production is expected to increase to more than 5 billion tons per year over the next 30 years. Due to economic development and rapid urbanization of underdeveloped countries, the demand for new buildings will increase, and the demand for concrete and cement will inevitably increase.

The cement required for manufacturing concrete used in most buildings is produced at a rate of at least 4 billion tons per year on a global basis. In the manufacturing process of the cement, a limestone raw material goes through a heating process. At this time, a large amount of carbon dioxide (CO₂) that is a representative greenhouse gas is emitted.

Specifically, in the conventional cement manufacturing facility, limestone (CaCO₃) that is a main raw material of a cement raw material is preheated by a preheater, the limestone is calcined by a calciner and a cyclone at a lowermost stage of the preheater, and then the limestone is burned by a rotary kiln at a high temperature atmosphere of about 1450 degrees Celsius, so that a cement clinker is manufactured.

Due to the calcining, a chemical reaction represented as limestone (CaCO₃) → CaO + CO₂↑, in which the limestone is the cement raw material, occurs, and a high concentration of CO₂ gas is generated. In addition, fossil fuel is burned in a main burner in order to maintain the rotary kiln under a high temperature atmosphere, so that a high concentration of CO₂ gas is also generated by combustion of the fossil fuel.

Here, in the exhaust gas from the main burner, the combustion air contains a lot of N₂ gas, so that the concentration of CO₂ gas is low.

As described above, in an exhaust gas discharged from a cement kiln, a high concentration of CO₂ gas and a low concentration of CO₂ gas are mixed, and a large amount of CO₂ gas is discharged from the cement kiln, so that there is an urgent need for a plan for efficiently reducing CO₂ gas. Accordingly, the development of carbon dioxide capture technology is actively being performed.

Meanwhile, in a conventional carbon dioxide capture technology, a process in which carbon dioxide (CO₂) contained in a combustion exhaust gas is cooled in a cooling tower, CO₂ is absorbed in an alkanolamine aqueous solution such as monoethanolamine and so on in an absorption tower and the remaining combustion exhaust gas is emitted into the atmosphere, the alkanolamine aqueous solution in which CO₂ is absorbed is supplied to a recycling tower and is recycled by heating the alkanolamine aqueous solution in a reboiler, the alkanolamine aqueous solution is returned to the absorption tower, and then CO₂ is desorbed and recovered is known. However, since alkanolamine has a high CO₂ absorption reaction heat and has a high decomposition heat in the recycling process, there is a problem that alkanolamine has a high energy consumption and therefore has a low economic feasibility.

Therefore, there is an urgent need for a plan capable of securing the economic feasibility compared to that of the conventional technology and capable of efficiently capturing carbon dioxide emitted from a cement manufacturing facility.

In addition, as carbon dioxide capture technology has recently been developed, carbon dioxide capture products have been produced, but technology for utilizing or storing generated carbon dioxide capture products has not yet been developed, so that technology development is required.

Meanwhile, in a conventional carbon dioxide storing apparatus developed so as to store a CO₂ capture product, it is common to store CO₂ in a liquid state due to an economic problem of storing CO₂. To this end, a pressure tank that maintains CO₂ in a high-pressure and low-temperature state is required, so that the manufacturing cost is increased and there is a problem that the operation cost for operating the pressure tank in the high-pressure and low-temperature state is increased.

### Disclosure

### Technical Problem

Accordingly, the present disclosure has been made keeping in mind the above problems occurring in the related art, and an objective of the present disclosure is to provide a system for reducing carbon dioxide in an exhaust gas generated during a cement manufacturing process.

In addition, another objective of the present disclosure is to provide a system for capturing and recycling carbon dioxide for a cement manufacturing facility, the system being configured to capture carbon dioxide in an exhaust gas and to convert the captured carbon dioxide into a carbon resource by using a basic alkali mixed solution, thereby being capable of removing carbon dioxide and also converting carbon dioxide into other useful materials.

In addition, still another objective of the present disclosure is to provide system for capturing and recycling carbon dioxide for a cement manufacturing facility, the system being configured to capture carbon dioxide by using a basic alkali mixed solution that solves a disadvantage of an alkanolamine aqueous solution which is a carbon dioxide absorber and which is widely used in a conventional technology, thereby being capable of securing economic feasibility compared to that of the conventional technology.

In addition, yet another objective of the present disclosure is to provide a system for capturing and recycling carbon dioxide and producing hydrogen for a cement manufacturing facility, the system being configured such that carbon dioxide in an exhaust gas generated during a cement manufacturing process is captured and converted into a carbon resource and then the converted carbon resource is stored in an underground and is used, thereby being capable of more stably and efficiently storing the carbon resource, which is a carbon dioxide capture reactant, than a conventional carbon dioxide storing apparatus, being capable of reducing the manufacturing cost and the operation cost, and being capable of allowing the stored carbon resource to be used later when the carbon resource is required.

The technical problems to be solved by the present disclosure are not limited to the above-mentioned problems, and other problems which are not mentioned will be clearly understood by those skilled in the art from the following description.

### Technical Solution

In order to achieve the objectives of the present disclosure, according to an aspect of the present disclosure, there is provided a system for capturing and recycling carbon dioxide and producing hydrogen for a cement manufacturing facility, the system including: a preheater provided with multiple stages of cyclones arranged in series in a vertical direction and configured to receive and preheat a cement raw material; a calciner configured to calcine the cement raw material preheated by the preheater; a kiln configured to burn the cement raw material calcined in the calciner; an exhaust line connected to the cyclones of the preheater and configured to discharge an exhaust gas respectively discharged from the calciner and the kiln to an outside; a reactor disposed on the exhaust line and configured to capture carbon dioxide in the exhaust gas by receiving the exhaust gas and reacting the exhaust gas with a basic alkali mixed solution, the reactor being configured to collect a reactant containing the captured carbon dioxide, and the reactor being configured to separate a carbon dioxide reactant and a waste solution in the reactant; and a hydrogen generator configured to generate hydrogen gas by receiving the separated carbon dioxide from the reactor.

In addition, according to an aspect, the reactor may include: a mixer configured to supply the basic alkali mixed solution; an absorption column configured to capture carbon dioxide in the exhaust gas by reacting the basic alkali mixed solution supplied from the mixer with the exhaust gas in which micro bubbles are formed by passing through a bubbler formed on a lower portion of the absorption column; a separator configured to collect the reactant containing carbon dioxide captured in the absorption column and configured to separate the carbon dioxide reactant and the waste solution from the reactant; and a carbon resource storage configured to store the separated carbon dioxide reactant for resource utilization thereof.

In addition, according to an aspect, the mixer may be configured to generate the basic alkali mixed solution by mixing a basic alkaline solution supplied from a basic alkaline solution storage with water supplied from a water source.

In addition, according to an aspect, the basic alkaline solution and water may be mixed in a ratio of 1:1 to 1:5.

In addition, according to an aspect, an average pH of the basic alkali mixed solution may be pH 12 to pH 13.5.

In addition, according to an aspect, the basic alkali mixed solution may include: at least one oxide selected from a group consisting of SiO₂, Al₂O₃, Fe₂O₃, TiO₂, MgO, MnO, CaO, Na₂O, K₂O, and P₂O₃; at least one metal selected from a group consisting of Li, Cr, Co, Ni, Cu, Zn, Ga, Sr, Cd, and Pb; a crystallized synthetic zeolite manufactured from an alumina-based material, a silica-based material, and sodium hydroxide; and at least one liquid compound selected from a group consisting of sodium tetraborate (Na₂B₄O₇·10H₂O), sodium hydroxide (NaOH), sodium silicate (Na₂SiO₃), potassium hydroxide (KOH), and hydrogen peroxide (H₂O₂).

In addition, according to an aspect, the basic alkali mixed solution may be input by being adjusted through a valve in the mixer when a level of the basic alkali mixed solution in the absorption column is lowered to less than 90%, and inputting of the basic alkali mixed solution may be stopped and, at the same time, a basic alkaline solution and water may be mixed until a pH of the basic alkali mixed solution becomes pH 12 to pH 13.5 when the level of the basic alkali mixed solution becomes 100%.

In addition, according to an aspect, the bubbler may be configured to form exhaust gas micro bubbles by using the exhaust gas.

In addition, according to an aspect, the hydrogen generator may include a water electrolysis cell configured to generate hydrogen gas by electrolysis using sodium carbonate (Na₂CO₃) or sodium bicarbonate (NaHCO₃) as an electrolyte, sodium carbonate (Na₂CO₃) or sodium bicarbonate (NaHCO₃) being the carbon dioxide reactant separated from the reactor.

In addition, according to an aspect, the cyclones may be formed such that the cyclone which is positioned at an uppermost stage and to which the cement raw material is supplied and the cyclone which is positioned at a lowermost stage and to which the exhaust gas respectively discharged from the calciner and the kiln is supplied are arranged at two stages in series in the vertical direction.

In addition, according to an aspect, the carbon dioxide reactant may include sodium carbonate (Na₂CO₃) or sodium bicarbonate (NaHCO₃).

In addition, according to an aspect, the separator may include: a centrifuge configured to separate the waste solution and the carbon dioxide reactant containing sodium carbonate (Na₂CO₃) or sodium bicarbonate (NaHCO₃) from the reactant; and a dehydrator formed corresponding to an inner circumference of a discharge pipe for discharging only sodium bicarbonate in the carbon dioxide reactant, the dehydrator having a surface provided with fine holes formed in a size capable of allowing carbon bicarbonate to pass therethrough.

In addition, according to an aspect, the dehydrator may include: a discharge pipe connected to an outlet of the reactor; a separation membrane provided in a hollow of the discharge pipe and provided with a plurality of filter holes so that a carbonate solution containing carbonate powder having a particle size equal to or less than a predetermined particle size is filtered and extracted, the carbonate solution being precipitated from the reactor; and a drying part configured to remove moisture by spraying dry air to the carbonate solution that has passed through the separation membrane, thereby acquiring carbonate powder.

In addition, according to an aspect, vibration may be continuously or selectively applied to the separation membrane, thereby detaching carbonate powder trapped in the filter holes from the filter holes or preventing carbonate powder from being trapped in the filter holes.

In addition, according to an aspect, a clinker cooler as a cooler for cooling a cement clinker acquired by burning the cement raw material may be further mounted on the kiln.

In addition, according to an aspect, a cement mill for pulverizing the cement clinker which is a half-finished cement product and which is cooled by the clinker cooler so as to process the cement clinker into cement powder may be further mounted on the clinker cooler.

### Advantageous Effects

According to embodiments of the present disclosure, the following effects may be realized. However, the embodiments may not include all these effects, and a claim scope of the present disclosure is not construed as being limited thereto.

According to an embodiment of the present disclosure, carbon dioxide may be reduced by capturing carbon dioxide in the exhaust gas discharged during the cement manufacturing process, and sodium carbonate or sodium bicarbonate, which is a useful resource, may be manufactured by using the captured carbon dioxide.

In addition, according to an embodiment of the present disclosure, carbon dioxide is captured by using the basic alkali mixed solution that solves a disadvantage of an alkanolamine aqueous solution that is a carbon dioxide absorber widely used in a conventional technology, and the captured carbon dioxide reactant may be utilized in various industrial fields such as food additives, detergents, soap raw materials, high-tech medical industries, wastewater treatment, and so on, so that profit generation is capable of being realized and economic feasibility compared to that of the conventional technology is capable of being secured.

In addition, according to an embodiment of the present disclosure, a carbon resource that is a carbon dioxide capture reactant is capable of being stably and efficiently stored in a space larger than a conventional carbon dioxide storing apparatus and, at the same time, the manufacturing cost and the operation cost are capable of being reduced and also the stored carbon resource is capable of being used later when the stored carbon resource is required.

### Description of Drawings

FIG. 1 is a view schematically illustrating a system for capturing and recycling carbon dioxide and producing hydrogen for a cement manufacturing facility according to an embodiment of the present disclosure.
FIG. 2 is a view illustrating a reactor according to an embodiment of the present disclosure.
FIG. 3 is a view schematically illustrating a configuration of an absorption column for improving the carbon dioxide capture performance of the reactor according to an embodiment of the present disclosure.
FIG. 4 is a cross-sectional view illustrating a carbon resource storage according to an embodiment of the present disclosure.
FIG. 5 is a view illustrating an underground temperature distribution according to a depth from a general ground surface.
FIG. 6 is a conceptual view illustrating a hydrogen generator according to an embodiment of the present disclosure.
FIG. 7 is an enlarged view illustrating the B part illustrated in FIG. 6.
FIG. 8 is an enlarged view illustrating the A part illustrated in FIG. 6.
FIG. 9 is a view schematically illustrating a detailed configuration of a separator according to an embodiment of the present disclosure.

### Mode for Invention

Since the present disclosure may be variously modified and have several exemplary embodiments, specific exemplary embodiments will be shown in the accompanying drawings and be described in detail in a detailed description.

However, it should be understood that the specific embodiments according to the concept of the present disclosure are not limited to the embodiments which will be described hereinbelow with reference to the accompanying drawings, but all of modifications, equivalents, and substitutions are included in the scope and spirit of the present disclosure.

It is to be understood that terms such as "including", "having", and so on are intended to indicate the existence of the features, numbers, steps, actions, elements, components, or combinations thereof disclosed in the specification, and are not intended to preclude the possibility that one or more other features, numbers, steps, actions, elements, components, or combinations thereof may exist or may be added.

The present disclosure relates to a system for capturing and recycling carbon dioxide and producing hydrogen for a cement manufacturing facility, the system being configured to reduce carbon dioxide in an exhaust gas generated during a cement manufacturing process.

Hereinafter, a system for capturing and recycling carbon dioxide and producing hydrogen for a cement manufacturing facility according to an embodiment of the present disclosure will be described in more detail with reference to the following drawings.

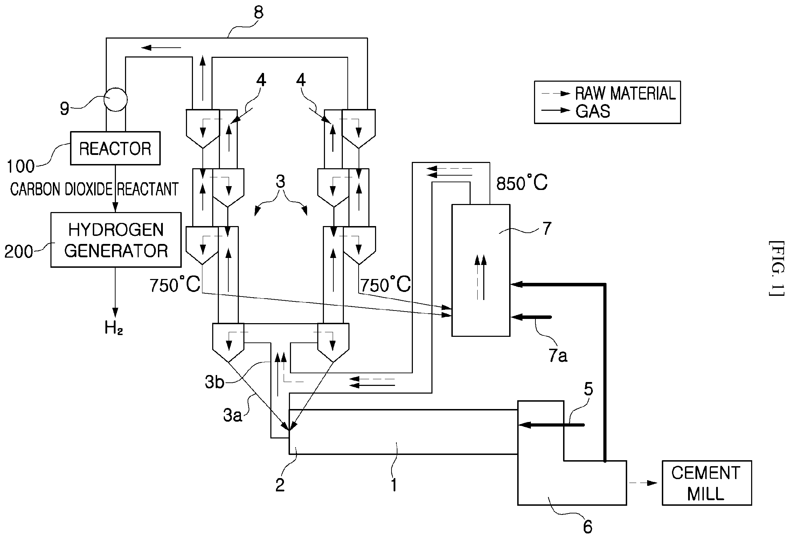

Referring to FIG. 1, in a brief description of the system for capturing and recycling carbon dioxide and producing hydrogen for the cement manufacturing facility according to an embodiment of the present disclosure, limestone (CaCO₃) that is included as a main raw material of a cement raw material is preheated by a preheater 3, the limestone (CaCO₃) is subsequently calcined by a calciner 7 and a cyclone at a lowermost stage of the preheater 3, the limestone (CaCO₃) is burned under a high temperature atmosphere of about 1450 degrees Celsius in a kiln 1 so that a cement clinker is manufactured, and then carbon dioxide generated during the process of manufacturing the cement clinker is introduced into a reactor 100 through an exhaust line 8, so that carbon dioxide is capable of being captured.

In addition, the system for capturing and recycling carbon dioxide and producing hydrogen for the cement manufacturing facility is a system capable of securing economic feasibility compared to that of a conventional technology since the system is capable of capturing carbon dioxide in an exhaust gas generated during a cement manufacturing process, capable of generating a carbon dioxide reactant containing sodium carbonate (Na₂CO₃) or sodium bicarbonate (NaHCO₃), which is a useful material, by using the captured carbon dioxide, and capable of storing the generated carbon dioxide reactant in an underground storage with little temperature change.

Alternatively, in the present disclosure, an additional economic benefit may be acquired by transmitting a carbon dioxide reactant generated in the reactor 100 to a hydrogen generator 200 connected to the reactor and producing a valuable hydrogen gas.

To this end, the system for capturing and recycling carbon dioxide and producing hydrogen for the cement manufacturing facility may include the preheater 3, the calciner 7, the kiln 1, the exhaust line 8, the reactor 100, and the hydrogen generator 200.

In addition, optionally, a main burner 5 for heating an inner portion of the kiln 1 and a clinker cooler 6 as a cooler for cooling a cement clinker after burning may be mounted on a right front side of the kiln 1.

In addition, optionally, a cement mill configured to pulverize the cement clinker which is a cement half-finished product cooled by the clinker cooler in order to process the cement clinker into cement powder may be mounted on the clinker cooler 6. In cement mil the grinder, plaster as a setting retarder is mixed with the clinker, and the mixture of the plaster and the clinker is pulverized into very fine powder with a particle size of 44 *µ*m or less, and then the finished cement is stored in a silo that is a cement storage.

The preheater 3 serves to preheat the cement raw material, and two sets of the preheater 3 are mounted in parallel on a left rear end portion 2 of a rotary kiln that is the kiln 1.

Each preheater 3 includes a multiple stages of cyclones arranged in series in a vertical direction.

Specifically, the multiple stages of cyclones are formed such that a cyclone which is positioned at an uppermost stage and to which the cement raw material is supplied and a cyclone which is positioned at the lowermost stage and to which the exhaust gas respectively discharged from the calciner and the kiln are arranged at two stages in series in the vertical direction.

After the cement raw material is supplied by the cyclone at the uppermost stage of a supply line 4, the cement raw material sequentially falls toward the cyclone at the lowermost stage, so that the cement raw material is capable of being preheated by a high temperature exhaust gas that moves upward from the kiln 1.

The calciner 7 serves to calcine the cement raw material preheated by the preheater 3. After the cement raw material preheated by the preheater 3 is withdrawn from the cyclone at the second state from downward and then is supplied to the calciner 7, the cement raw material is burned by being heated by a burner 7a, and then the cement raw material is introduced into an inlet end portion 2 of the kiln 1 through a transport pipe 3a from the cyclone at the lowermost stage.

Here, in the process in which the calciner 7 calcines the preheated cement raw material, a chemical reaction represented as limestone (CaCO₃) → CaO + CO₂↑ occurs, and carbon dioxide is generated.

The kiln 1 serves to burn the cement raw material calcined at the calciner 7. Specifically, the cement raw material calcined at the calciner 7 is transported to the kiln 1 through the transport pipe 3a from the cyclone at the lowermost stage disposed at the preheater 3, and the kiln 1 burns the cement raw material calcined at the calciner 7 at a high temperature of about 1450 degrees Celsius by a combustion exhaust gas from the main burner 5 so that the cement clinker that is a half-finished product is generated.

Here, as fossil fuel is burned in the main burner 5 in order for the kiln 1 to burn the calcined cement raw material and to maintain a high temperature atmosphere, the exhaust gas containing carbon dioxide may be generated.

Meanwhile, in the inlet end portion 2 of the kiln 1, an exhaust gas pipe 3b supplying the exhaust gas discharged from the kiln 1 to the cyclone at the lowermost stage is mounted. Furthermore, the exhaust gas supplied to the cyclone is sequentially supplied to the cyclone at the upper side and preheats the cement raw material and, at the same time, the exhaust gas is finally discharged toward the reactor 100 through the exhaust line 8 by an exhaust fan 9 from an upper portion of the cyclone at the uppermost stage.

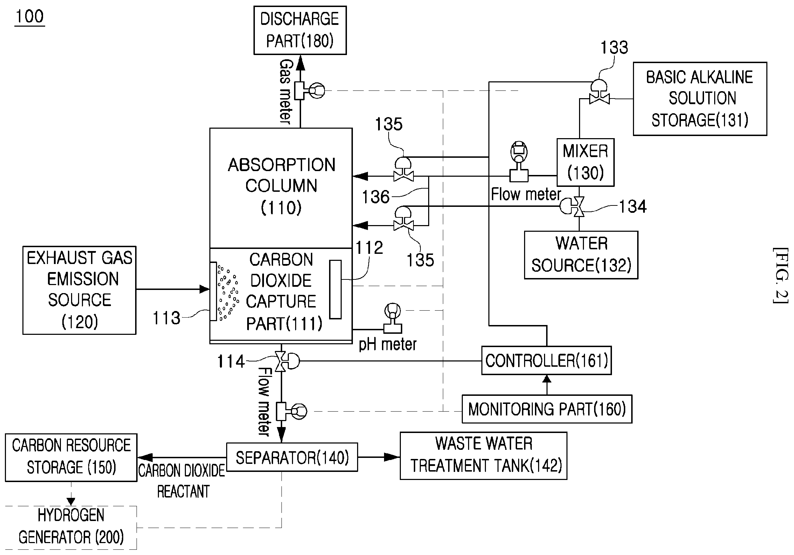

As a result, the reactor 100 is disposed on the exhaust line 8, and the reactor 100 may receive the exhaust gas containing carbon dioxide generated in the calciner 7 and the exhaust gas containing carbon dioxide generated in the kiln 1 through the exhaust line 8. Furthermore, the reactor 100 may capture carbon dioxide in the exhaust gas by reacting the basic alkali mixed solution with the supplied exhaust gas containing carbon dioxide, may collect a reactant containing the captured carbon dioxide, and may separate a carbon dioxide reactant and a waste solution from the reactant. Hereinafter, the reactor 100 will be described in detail with reference to FIG. 2.

FIG. 2 is a view illustrating a reactor according to an embodiment of the present disclosure.

Referring to FIG. 2, the reactor 100 according to an embodiment of the present disclosure may have a structure capable of reducing carbon dioxide by capturing carbon dioxide in an exhaust gas discharged from the cement manufacturing facility and capable of performing carbon resource utilization by using the captured carbon dioxide such that the captured carbon dioxide is converted into sodium carbonate or sodium bicarbonate.

Specifically, the reactor 100 according to an embodiment of the present disclosure is a reactor configured to capture carbon dioxide in an exhaust gas discharged from the calciner 7 and the kiln 1 in the cement manufacturing facilities by using a basic alkaline solution. Furthermore, the reactor 110 includes an absorption column 110, a carbon dioxide capture part 111, an exhaust gas emission source 120, a mixer 130, a separator 140, a carbon resource storage 150, and a discharge part 180.

The absorption column 110 may refer to a facility, a building, equipment, and so on configured to capture carbon dioxide. In addition, the carbon dioxide capture part 111 positioned on a lower end of the absorption column 110 is a portion of the absorption column 110, and may refer to a portion where carbon dioxide is captured by bubbling an exhaust gas.

Here, the exhaust gas emission source 120 may be the exhaust line 8 which is connected to the kiln 1 or the calciner 7 and which is configured to discharge an exhaust gas containing carbon dioxide, or may be a portion of the exhaust line 8.

The absorption column 110 includes the carbon dioxide capture part 111 at the lower end of the absorption tower 100, and is configured to capture only carbon dioxide in the exhaust gas by reacting the basic alkali mixed solution with the exhaust gas (micro bubbles of the exhaust gas) discharged from the cement manufacturing facility. After carbon dioxide in the exhaust gas is captured, the exhaust gas in which carbon dioxide is removed may remain in a gaseous state in the absorption column 110.

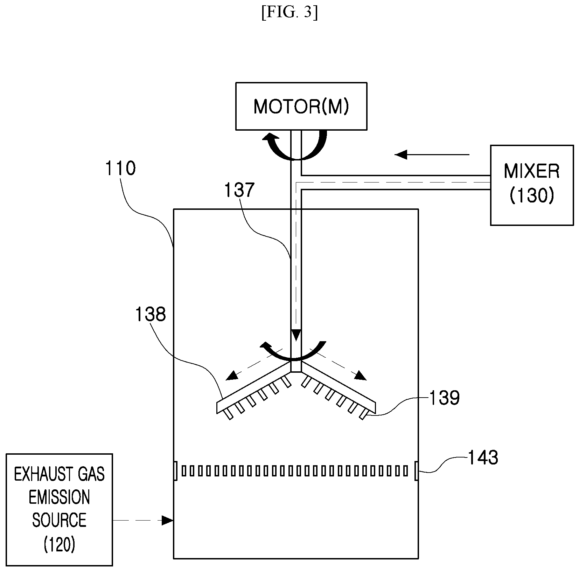

In the absorption column 110, a nozzle (see reference numeral 139 in FIG. 3) is installed on an upper portion of the absorption column 110, and a basic alkali mixed solution is sprayed into the absorption column 110 through the nozzle (see reference numeral 139 in FIG. 3) from the mixer 130, and the basic alkali mixed solution is collected on the carbon dioxide capture part 111 at the lower end of the absorption column 110. At the same time as the basic alkali mixed solution is sprayed, the exhaust gas supplied from the exhaust gas emission source 120 passes through a bubbler 113 in the carbon dioxide capture part 111 at the lower portion of the absorption column 110, the exhaust gas in which micro bubbles are formed is supplied, and the basic alkali mixed solution and the micro bubbles of the exhaust gas react with each other within the carbon dioxide capture part 111, so that carbon dioxide is captured.

When the exhaust gas reacts with the basic alkali mixed solution, the micro bubbles are formed while the exhaust gas passes through the bubbler 113 having fine holes formed on an outlet of the exhaust gas emission source 120.

As the exhaust gas supplied from the exhaust gas emission source 120 passes through the bubbler 113, the bubbler 113 may form the micro bubbles in the exhaust gas. Furthermore, the smaller the size of the micro bubbles, the larger the reaction area of the exhaust gas and the alkaline solution, so that the carbon dioxide capture ability may be increased. For example, the micro bubbles may refer to bubbles which have a size about equal to or less than 50 *µ*m and which exist in an aqueous solution.

In addition, the absorption column 110 may include a level indicator 112 inside the absorption column 110, so that a level of a solution in the absorption column 110 is capable of being detected.

The nozzle (see reference numeral 139 in FIG. 3) may include a plurality of nozzles, and may be formed of at least one stage. The nozzle (see reference numeral 139 in FIG. 3) is connected to the mixer 130, and may supply a basic alkali mixed solution from the mixer 130.

The absorption columns 110 may be configured in series, in parallel, or in a series and parallel complex arrangement. For example, the absorption columns 110 may be arranged in series when the flow velocity of the exhaust gas is high. When unreacted CO₂ is discharged from the absorption columns due to a high flow velocity, the absorption columns may be mounted in series so as to capture unreacted CO₂.

In addition, for example, the absorption column 110 may be arranged in parallel when the flow rate of the exhaust gas is large. When the flow rate of the exhaust gas exceeds the amount that the absorption column can capture, the amount of carbon dioxide that can be captured may be increased by arranging the absorption column in parallel.

The exhaust gas emission source 120 may utilize carbon dioxide that is an exhaust gas introduced through the exhaust line 8 from the calciner 7 and the kiln 1. For example, the exhaust gas emission source 120 may be positioned at the rear end of the cement manufacturing facility.

The mixer 130 mixes a basic alkaline solution supplied from a basic alkaline solution storage 131 with water supplied from a water source 132, and supplies the mixture to the nozzle (see reference numeral 139 in FIG. 3) of the absorption column 110.

The basic alkali mixed solution in which the basic alkaline solution and the water are mixed with each other may be supplied by using a separately connected by-pass line 136 when a supply amount or a required amount of the basic alkali mixed solution is increased.

The basic alkaline solution and water may be mixed in a ratio of 1:1 to 1:5. For example, the basic alkaline solution and water may be mixed in a ratio of 1:1 to 1:4, 1:1 to 1:3, 1:1 to 1:2, 1:2 to 1:5, 1:2 to 1:3, or 1:3 to 1:5.

A carbon dioxide capture rate may be increased as the basic alkali mixed solution mixing ratio of the basic alkaline solution and water is increased, but the mixing ratio of water may be adjusted in consideration of the cost aspect.

The basic alkali mixed solution includes: at least one oxide selected from a group consisting of SiO₂, Al₂O₃, Fe₂O₃, TiO₂, MgO, MnO, CaO, Na₂O, K₂O, and P₂O₃; at least one metal selected from a group consisting of Li, Cr, Co, Ni, Cu, Zn, Ga, Sr, Cd, and Pb; a crystallized synthetic zeolite manufactured from an alumina-based material, a silica-based material, and sodium hydroxide; and at least one liquid compound selected from a group consisting of sodium tetraborate (Na₂B₄O₇·10H₂O), sodium hydroxide (NaOH), sodium silicate (Na₂SiO₃), potassium hydroxide (KOH), and hydrogen peroxide (H₂O₂).

The water source 132 may include all water that may be easily acquired at a system installation site, and water may be seawater as an example.

An average pH of the basic alkali mixed solution may be at least pH 12. For example, the pH may be pH 12 to pH 13.5, pH 13, pH 12, pH 12.1, pH 12.2, or pH 12.3. The pH of the basic alkali mixed solution may be measured by a pH meter in the absorption column 110, and carbon dioxide cannot be captured anymore when the pH of the basic alkali mixed solution in the absorption column 110 is less than pH 10.5. Therefore, in order to adjust the pH of the basic alkali mixed solution, the basic alkaline solution and water may be supplied to the mixer 130 by adjusting the amount of the basic alkaline solution and the amount of water from zero to 100% by each valve 133 and 134.

When the level of the basic alkali mixed solution in the absorption column 110 is lower than 90% (measured by the level indicator), the input of the basic alkali mixed solution may be adjusted through a valve 135 at the mixer 130 so that the basic alkali mixed solution is input. Furthermore, when the level of the solution reaches 100%, the input of the basic alkali mixed solution may be stopped. At the same time, the basic alkaline solution and water may be mixed until the pH of the basic alkali mixed solution becomes pH 12 to pH 13.5.

Since the amount of basic alkali mixed solution supplied to the absorption column 110 and the amount of the solution discharged from the separator 140 are the same, the carbon dioxide capturing system is capable of being continuously maintained. Therefore, the valve (including a bypass valve if necessary) 135 is adjusted so that the same amount of the basic alkali mixed solution as a value of a flow meter mounted in the line from the absorption column 110 to the separator 140 is supplied to the absorption column 110, thereby making the net flow to zero.

The reactant containing carbon dioxide captured by reacting the basic alkali mixed solution and the exhaust gas introduced from the calciner 7 and the kiln 1 of the cement manufacturing facility with each other is collected in the carbon dioxide capture part 111 of the absorption column 110, the carbon dioxide reactant and the waste solution from the reactant are moved to the separator 140 through a valve 14, and the carbon dioxide reactant and the waste solution are separated from the reactant.

The separated carbon dioxide reactant may be moved to the carbon resource storage 150, and may be recycled so as to be utilized for other purposes. For example, the carbon dioxide reactant may include sodium carbonate (Na₂CO₃) or sodium bicarbonate (NaHCO₃).

As described in Formula 1 below, the carbon dioxide reactant may be formed by reacting the basic alkali mixed solution with carbon dioxide.

<Formula 1> 2NaOH + CO₂ → Na₂CO₃ + H₂O

Na₂CO₃ + H₂O + CO₂ → 2NaHCO₃

In the reactant, a waste solution other than a carbon dioxide reactant is moved to a wastewater treatment tank 142 and then is discarded. For example, the waste solution may contain illite minerals, water, and so on that are contained in the basic alkali mixed solution that has finished a catalyst function.

The carbon resource storage 150 is a carbon dioxide reactant storage in which an underground environment is considered, is capable of stably and efficiently storing a carbon resource that is a carbon dioxide capture reactant in a space larger than a conventional carbon dioxide storage apparatus and, at the same time, is capable of reducing the manufacturing cost, and may be implemented such that the stored carbon resource is capable of being utilized later when the stored carbon resource is required.

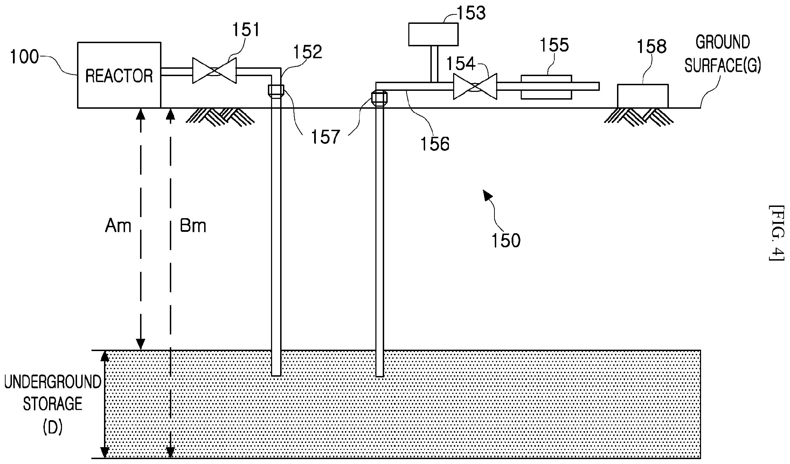

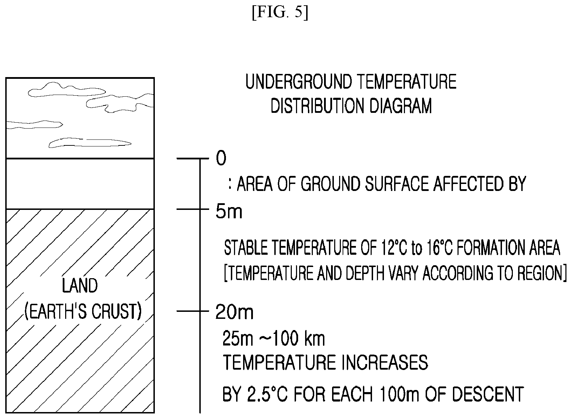

Hereinafter, the carbon resource storage 150 will be described in detail with reference to FIG. 4 and FIG. 5 which will be described later.

Meanwhile, the residual exhaust gas in which carbon dioxide is removed after carbon dioxide is captured in the carbon dioxide capture part 111 is discharged through the discharge part 180. For example, the residual exhaust gas discharged through the discharge part 180 may include the exhaust gas in which carbon dioxide is removed and may include some small amounts of uncaptured carbon dioxide.

At this time, since the concentration of carbon dioxide cannot exceed the regulatory standard value when the residual exhaust gas is discharged, the residual exhaust gas that does not exceed a standard (the standard set by a manager after the concentration of carbon dioxide in the atmosphere is measured) may be discharged on the basis of the concentration of carbon dioxide in the atmosphere to which the residual exhaust gas is discharged.

The reactor 100 may further include: a monitoring part 160 configured to monitor a level and a pH of a basic alkali mixed solution in the absorption column; and a controller 161 configured to adjust a supply amount of the basic alkali mixed solution by the monitoring part 160.

Values of a gas meter, a pH meter, and a flow meter measured in all processes in the reactor 100 are managed in the monitoring part 160, and the controller 161 performs adjustment on the basis of the values represented in the monitoring part 160. The valves 114, 133, 134, and 135 may be adjusted in terms of percentage with respect to values input from the controller 161.

In the system for capturing and recycling carbon dioxide and producing hydrogen for the cement manufacturing facility according to the present disclosure, carbon dioxide may be reduced by capturing carbon dioxide in the exhaust gas generated during the cement manufacturing process, and the captured carbon dioxide may be recycled into other useful materials by converting the captured carbon dioxide into sodium carbonate or sodium bicarbonate.

FIG. 3 is a view schematically illustrating a configuration of the absorption column 110 for improving the carbon dioxide capture performance of the reactor 100 according to an embodiment of the present disclosure.

Referring to FIG. 3, in the configuration of the absorption column 110 according to an embodiment of the present disclosure, the absorption tower 110 includes a reactor body formed in a cylindrical shape, a motor M, a rotary shaft 137 configured to be rotated by the motor M, and a rotation wing 138 that is operatively connected to the rotary shaft 137. Furthermore, the rotary shaft 137 and the rotation wing 138 are positioned inside the reactor body, the rotation wing 138 is formed such that the plurality of nozzles 139 through which the basic alkali mixed solution is capable of being sprayed in the form of bubbles is formed in a longitudinal direction by being spaced apart from each other at a predetermined distance, the basic alkali mixed solution supplied from the mixer 130 is introduced into the rotary shaft 137, and the basic alkali mixed solution introduced accordingly is sprayed inside the reactor body having the cylindrical shape through the plurality of nozzles 139.

Specifically, according to an embodiment of the present disclosure, the rotation wing 138 is operatively connected to the rotary shaft 137. That is, as the rotary shaft 137 of the motor M is rotated, the rotation wing 138 for agitating is rotated simultaneously, so that the basic alkali mixed solution inside the absorption column 110 is capable of being agitated.

In addition, the plurality of nozzles 139 formed on the rotating wing 138 is configured to generate fine bubbles (bubbles having a diameter of several hundred micrometers to several micrometers). Therefore, as the rotary shaft 137 is rotated, the rotation wing 138 for agitating is rotated simultaneously, so that the basic alkali mixed solution is capable of being more finely sprayed inside the absorption column 110.

In addition, an inlet pipe may be mounted on the exhaust line 8 illustrated in FIG. 1 so that the exhaust gas introduced from the calciner 7 and the kiln 1 of the cement manufacturing facility is discharged to the lower portion of the absorption column 110. In addition, a baffle 143 having a plurality of slits or holes formed such that the exhaust gas is introduced into the absorption column 110 with a uniform speed distribution may be mounted.

According to the configuration of the absorption column 110 described above, the basic alkali mixed solution rotating and falling from the upper portion of the absorption column 110 to the lower portion of the absorption column 110 through the plurality of nozzles 139 which is formed on the rotation wing 138 and which is spaced apart from each other at the predetermined distance is formed as fine droplets, the rotation wing 38 being operatively connected to the rotary shaft 137. Furthermore, as the basic alkali mixed solution formed as the fine droplets and the exhaust gas formed as fine particles by passing through the baffle 143 having the plurality of slits or holes are in contact with each other, the carbon dioxide capture performance of the reactor 100 may be increased.

FIG. 4 is a view illustrating the carbon dioxide storage according to an embodiment of the present disclosure, and FIG. 5 is a view illustrating an underground temperature distribution according to a depth from a general ground surface.

Referring to FIG. 4 and FIG. 5, the carbon resource storage 150 is a carbon dioxide reactant storage in which an underground environment is considered, is capable of stably and efficiently storing a carbon resource that is a carbon dioxide capture reactant in a space larger than a conventional carbon dioxide storage apparatus and, at the same time, is capable of reducing the manufacturing cost, and may be implemented such that the stored carbon resource is capable of being utilized later when the stored carbon resource is required.

The carbon resource storage 150 may include an underground storage D, an inlet unit, a discharge unit connected to the underground storage and configured to unload the carbon dioxide reactant from the underground storage, a control unit, and a filter 152 filtering out impurities other than the carbon dioxide reactant during loading/unloading of the carbon dioxide reactant.

Here, the underground storage D is a place in which the carbon dioxide reactant separated by the reactor 100 is accommodated and which is capable of being excavated in a natural terrain. For example, as illustrated in FIG. 5, the underground storage D may be formed at a depth of the ground in which a stable temperature of 12 degrees Celsius to 16 degrees Celsius is formed without shielding.

For example, the underground storage D may be formed at a depth deeper than a depth of Am from the ground surface but may be formed at a depth lower than Bm from the ground surface. This is to prevent the carbon dioxide reactant from changing the state in a place where the temperature exceeds 50 degrees Celsius, and to store the carbon dioxide reactant in the form of bicarbonate in a liquid state or a gel state over a wide area for a long time.

The inlet unit serves to load the carbon dioxide reactant into the underground storage, and may include: an inlet valve 151 configured to open and close a flow path for the carbon dioxide reactant loaded inside the underground storage and to adjust the flow rate of the loaded carbon dioxide reactant; and an inlet line 152 connected to the underground storage such that the carbon dioxide reactant is capable of being loaded into the underground storage. Through the configuration of such an inlet unit, the carbon dioxide reactant separated from the reactor 100 may be stored in the underground storage.

The discharge unit serves to unload the carbon dioxide reactant from the underground storage, and may include: a discharge line 156 connected to the underground storage and configured to unload the carbon dioxide reactant to the outside of the underground storage; a discharge pump 155 provided on the discharge line 156 and configured to forcibly unload the carbon dioxide reactant accommodated in the underground storage to the outside; a discharge valve 154 configured to open and close a flow path toward the discharge pump 155 for the carbon dioxide reactant accommodated in the underground storage; and a vacuum pump 153 connected to the discharge line 156 between the underground storage and the discharge valve 154 and configured to form a vacuum state by discharging air in the underground storage to the outside. Through the configuration of such a discharge unit, the carbon dioxide reactant may be stably stored in the underground storage, and the pre-stored carbon dioxide reactant may be acquired and used later when the carbon dioxide reactant is required.

When the carbon dioxide reactant accommodated in the underground storage is loaded into the underground storage or when the carbon dioxide reactant is unloaded from the underground storage to the outside, the control unit 158 controls the inlet unit and the discharge unit so that the carbon dioxide reactant having an appropriate flow rate is capable of being stored in the underground storage or the carbon dioxide reactant pre-stored in the underground storage is capable of being discharged to the outside.

The filter 157 may be disposed in a path of the inlet line 152 or a path of the discharge line 156, and may have pores having a diameter of 10 *µ*m to 20 *µ*m formed in a size that allows penetration of the carbon dioxide reactant, so that the filter 157 is capable of filtering out impurities other than the carbon dioxide reactant during loading/unloading of the carbon dioxide reactant.

Accordingly, the filter 157 performs a function for filtering out impurities other than the carbon dioxide reactant when the carbon dioxide reactant introduced from the reactor 100 is loaded into the underground storage or the carbon dioxide reactant is unloaded from the underground storage to the outside. Therefore, impurities other than the carbon dioxide reactant are not mixed and may not be stored in the underground storage, or only the carbon dioxide reactant without impurities may be acquired when the carbon dioxide reactant pre-stored in the underground storage is unloaded to the outside.

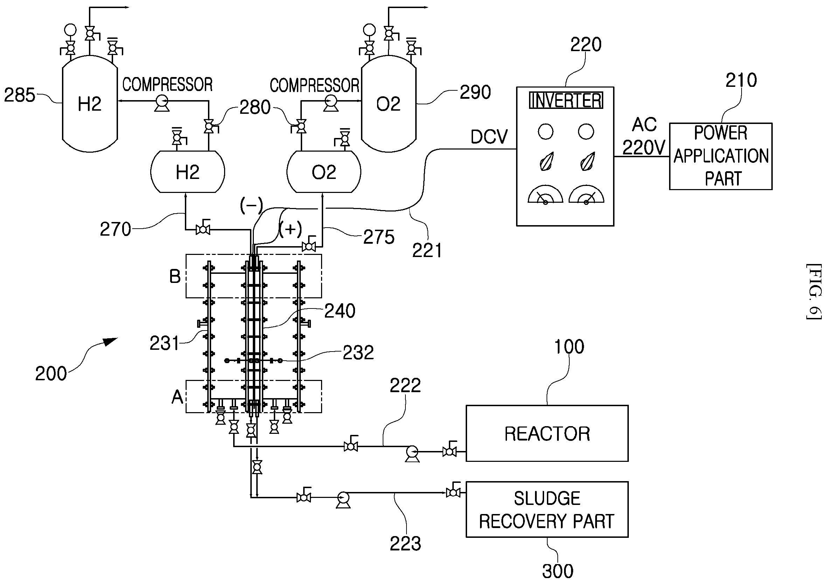

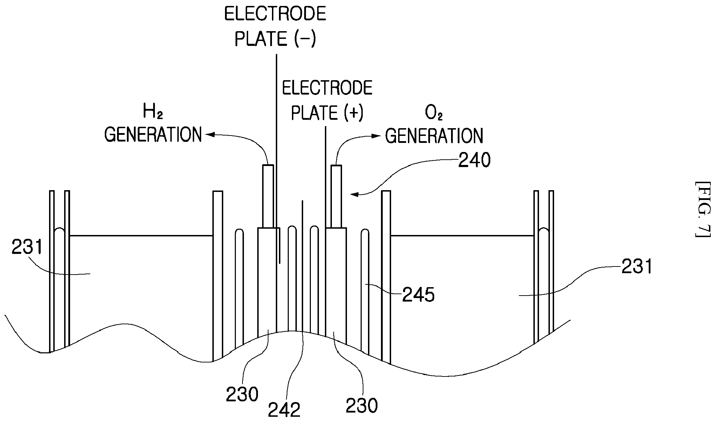

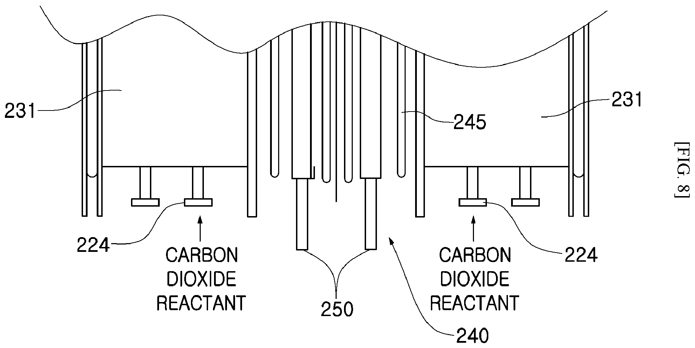

FIG. 6 is a conceptual view illustrating a hydrogen generator according to an embodiment of the present disclosure, FIG. 7 is an enlarged view illustrating the B part illustrated in FIG. 6, and FIG. 8 is an enlarged view illustrating the A part illustrated in FIG. 6.

As illustrated in FIG. 6 to FIG. 8, the hydrogen generator 200 may include: a carbon dioxide reactant supply tank 231 for supplying sodium carbonate (Na₂CO₃) or sodium bicarbonate (NaHCO₃), each being a carbon dioxide reactant separated from the reactor (see reference numeral 100 in FIG. 1); a water electrolysis cell 240 configured to generate hydrogen gas and oxygen gas through electrolysis by using sodium carbonate (Na₂CO₃) or sodium bicarbonate (NaHCO₃) supplied from the carbon dioxide reactant supply tank 231 as an electrolyte for the electrolysis; and a power application part 210 and an inverter 220 for applying a current to the water electrolysis cell 240.

The carbon dioxide reactant supply tank 231 receives sodium carbonate (Na₂CO₃) or sodium bicarbonate (NaHCO₃) through a carbon dioxide reactant inlet flow path 222 and stores sodium carbonate (Na₂CO₃) or sodium bicarbonate (NaHCO₃) as an electrolyte, sodium carbonate (Na₂CO₃) or sodium bicarbonate (NaHCO₃) being the carbon dioxide reactant separated from the reactor 100. Furthermore, the carbon dioxide reactant supply tank 231 may be provided with a carbon dioxide reactant inlet port 224 connected to an electrolyte supply flow path 232 configured to supply the carbon dioxide reactant stored in the carbon dioxide reactant supply tank 431 to the water electrolysis cell 240.

In the carbon dioxide reactant supply tank 231 may be provided with a pump for pumping sodium carbonate (Na₂CO₃) or sodium bicarbonate (NaHCO₃) being an electrolyte for the electrolysis performed by the hydrogen generator 200.

As illustrated in FIG. 7 and FIG. 8, the water electrolysis cell 240 may include: a negative electrode (-) plate and a positive electrode (+) plate; a diaphragm 242 that is an electrolyte membrane disposed between the negative electrode plate and the positive electrode plate; a pair of electrolyzers 230 which accommodates the carbon dioxide reactant supplied from the carbon dioxide reactant supply tank 231 and which is connected to a hydrogen storage tank 285 and an oxygen storage tank 290; a gas discharge part configured to discharge hydrogen gas and oxygen gas that are generated by electrolyzing the carbon dioxide reactant in the electrolyzers 230; and a drain 250 for discharging an ion material that has not been reacted by electrolysis.

Preferably, in order to prevent the carbon dioxide reactant stored in the carbon dioxide reactant supply tank 231 from being in contact with the electrode plates, a packing 245 formed as a non-conductor and a control part (not illustrated) capable of selectively controlling whether the carbon dioxide reactant inlet flow path 222 is opened or closed by using power of the power application part 210 may further be provided.

As in the following Formula 3, in a state in which the electrode plates at both sides are supplied with sodium carbonate (Na₂CO₃) or sodium bicarbonate (NaHCO₃) being the electrolyte in the present disclosure, the water electrolysis cell 240 generates hydrogen gas (H₂) and oxygen gas (O₂) as power is applied to the water electrolysis cell 240 by the power application part 210 and the inverter 220 through a DC busbar 221.

<Formula 3> Reduction electrode (negative electrode) reaction: Na₂CO₃ + CO₂+ 2H₂O + 2e⁻ → 2NaOH + 2CO₂ + 2OH⁻ + H₂

2NaHCO₃ + 2e⁻ → 2NaOH + 2CO₂ + 2OH⁻ + H₂

Oxidation electrode (positive electrode) reaction: Na₂CO₃ + CO₂ + H₂O - 2e⁻ → 2NaOH + 2CO₂ + 2H⁺ + O₂

2NaHCO₃ - 2e⁻ → 2NaOH + 2CO₂ + 2H⁺ + O₂

That is, at this time, sodium carbonate (Na₂CO₃) or sodium bicarbonate (NaHCO₃), which is an electrolyte supplied to the water electrolysis cell 240, dissociates on a surface of the negative electrode plate and discharges hydrogen gas, and oxygen gas is discharged on the positive electrode plate as oxygen ions move through the diaphragm that is the electrolyte membrane. Here, the ion material that has not been reacted in Formula 3 may be transferred to a sludge recovery part 300 of the hydrogen generator 200 through the drain 250.

By the process described above, hydrogen gas discharged from the water electrolysis cell 240 is discharged through a hydrogen discharge flow path 270 and passes through a filter and a compressor, so that high purity hydrogen gas may be stored in the hydrogen storage tank 285.

Similarly, oxygen gas discharged from the water electrolysis cell 240 is discharged through an oxygen discharge flow path 275 and passes through a filter and a compressor, so that high purity oxygen gas may be stored in the oxygen storage tank 290.

Meanwhile, in a cathode of a conventional water electrolysis technology that uses water as an electrolyte, OH- radicals are generated as reactants during a reduction process, and water (H₂O) is generated since OH- radicals easily recombine with oxygen (O₂) generated through oxidation at an anode and hydrogen (H₂) generated through reduction at the cathode, so that there is a problem the hydrogen (H₂) generation efficiency is reduced as a result.

However, in the present disclosure, sodium carbonate(Na₂CO₃) or sodium bicarbonate (NaHCO₃), which is a carbon dioxide reactant, is used as an electrolyte for electrolysis. Therefore, the recombination of the dissociated OH- radicals with hydrogen (H₂) and oxygen (O₂) in the conventional water electrolysis technology is prevented by sodium carbonate(Na₂CO₃) or sodium bicarbonate (NaHCO₃) being a carbon dioxide reactant, so that the hydrogen (H₂) generation efficiency may be increased as a result. In addition, in the present disclosure, since Na⁺ ions are dissociated through a water electrolysis reaction, the hydrogen (H₂) gas generation amount may be increased due to an increase in electrical conductivity, so that there is an effect that a problem of the conventional technology is capable of being solved.

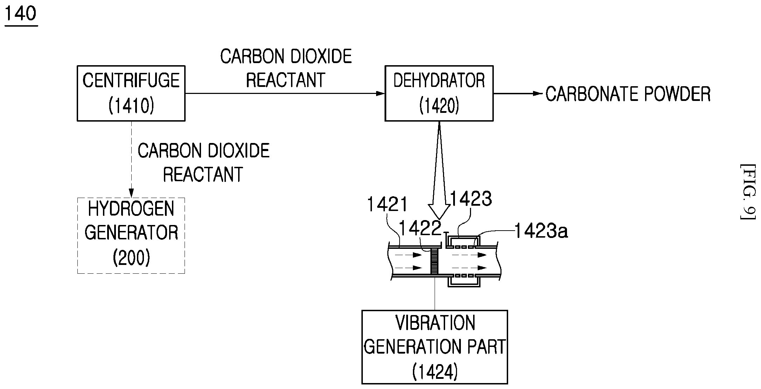

FIG. 9 is a view schematically illustrating a detailed configuration of a separator according to an embodiment of the present disclosure.

The separator 140 may include a centrifuge 1410 configured to separate the waste solution and the carbon dioxide reactant containing sodium carbonate (Na₂CO₃) or sodium bicarbonate (NaHCO₃) from the reactant, and may include a dehydrator 1420 formed corresponding to a size of an inner circumference of a discharge pipe 1421 for discharging only sodium bicarbonate in the carbon dioxide reactant separated from the centrifuge, the dehydrator 1420 having a surface provided with fine holes such that carbon bicarbonate is capable of passing therethrough.

More specifically, the dehydrator 1420 performs a function for extracting carbonate powder by removing water from the carbon dioxide reactant generated from the reactor 100.

According to an embodiment, looking at the configuration of the dehydrator 1420, the dehydrator 1420 is provided with the discharge pipe 1421 connected to an outlet of the reactor 100.

In addition, an inner hollow of the discharge pipe 1421 is provided with a separation membrane 1422 for filtering out carbonate particles having a predetermined size.

At this time, the separation membrane 1422 has a plurality of filter holes such that a carbonate solution containing carbonate particles which have a diameter equal to or less than a predetermined diameter and which are precipitated in the reactor 100 is filtered and then extracted.

For example, the diameter of the filter hole may be 10 *µ*m to 20 *µ*m and, accordingly, only carbonate particles having a particle size equal to or more than 10 *µ*m and equal to or less than 20 *µ*m are selectively transmitted through the separation membrane 1422.

In addition, a drying part 1423 is further provided around a circumference of a downstream side of the discharge pipe 1421 passing through the separator 1422.

The drying part 1423 performs a function for acquiring carbonate powder by removing moisture by spraying dry air to the carbonate solution passing through the separation membrane 1422.

For example, referring to FIG. 9, the drying part 1423 may be a rectangular air injection pipe bonded around the circumference of the discharge pipe 1421, and a plurality of through-holes 1423a is formed on a circumferential surface of the discharge pipe 1421 that is bonded to the air injection pipe so that dry air is capable of being injected inside the discharge pipe 1421.

Therefore, the carbonate solution introduced through the inlet of the discharge pipe 1421 of the dehydrator 1420 (left end in FIG. 9) passes through the separation membrane 1422 and then is filtered such that only carbonate particles having the particle size equal to or less than the predetermined particle size pass through the separation membrane 1422. Then, moisture is removed while the carbonate particles pass through the drying part 1423, so that carbonate powder having a uniform particle size is finally discharged to the outlet of the dehydrator 1420 (right end in FIG. 9).

In addition, a vibration generation part 1424 may further be provided on the separation membrane 1422.

The vibration generation part 1424 performs a function for continuously or selectively applying vibration to the separation membrane 1422, thereby preventing carbonate powder from being trapped in the filter hole of the separation membrane 1422 or detaching carbonate powder trapped in the filter hole.

Through this, high purity sodium bicarbonate powder can be acquired and can be sold immediately, so that a profit may be realized.

As described above, the carbon dioxide reactant generated in the system for capturing and recycling carbon dioxide and producing hydrogen for the cement manufacturing facility according to the present disclosure is capable of being stably and efficiently stored in a larger space and, at the same time, the manufacturing cost and the operation cost compared to that of a conventional carbon dioxide storing apparatus may be reduced and also the stored carbon resource may be used later when the carbon resource is required.

Although embodiments of the present disclosure have been described for illustrative purposes, those skilled in the art will appreciate that various modifications, additions and substitutions are possible, without changing the spirit or essential features of the present disclosure. Therefore, it should be understood that the embodiments described above are illustrative in all respects and not restrictive. The scope of the present specification is characterized by the appended claims rather than the detailed description described above, and it should be construed that all alterations or modifications derived from the meaning and scope of the appended claims and the equivalents thereof fall within the scope of the present specification.

Meanwhile, the exemplary embodiments of the present specification are disclosed in the present specification and the drawings, and specific terms are used, but the specific terms are used as general meanings merely for easily explaining the technical contents of the present specification and helping understand the present disclosure, but not intended to limit the scope of the present specification. It is obvious to those skilled in the art to which the present specification pertains that other modified embodiments may be carried out on the basis of the technical spirit of the present specification in addition to the exemplary embodiments disclosed herein.

### Industrial Applicability

The present disclosure may be widely used in the fields of system for capturing and recycling carbon dioxide and producing hydrogen for a cement manufacturing facility.

## Claims

1. A system for capturing and recycling carbon dioxide and producing hydrogen for a cement manufacturing facility, the system comprising:
a preheater provided with multiple stages of cyclones arranged in series in a vertical direction and configured to receive and preheat a cement raw material;
a calciner configured to calcine the cement raw material preheated by the preheater;
a kiln configured to burn the cement raw material calcined in the calciner;
an exhaust line connected to the cyclones of the preheater and configured to discharge an exhaust gas respectively discharged from the calciner and the kiln to an outside;
a reactor disposed on the exhaust line and configured to capture carbon dioxide in the exhaust gas by receiving the exhaust gas and reacting the exhaust gas with a basic alkali mixed solution, the reactor being configured to collect a reactant containing the captured carbon dioxide, and the reactor being configured to separate a carbon dioxide reactant and a waste solution in the reactant; and
a hydrogen generator configured to generate hydrogen gas by receiving the separated carbon dioxide from the reactor.

2. The system of claim 1, wherein the reactor comprises:
a mixer configured to supply the basic alkali mixed solution;
an absorption column configured to capture carbon dioxide in the exhaust gas by reacting the basic alkali mixed solution supplied from the mixer with the exhaust gas in which micro bubbles are formed by passing through a bubbler formed on a lower portion of the absorption column;
a separator configured to collect the reactant containing carbon dioxide captured in the absorption column and configured to separate the carbon dioxide reactant and the waste solution from the reactant; and
a carbon resource storage configured to store the separated carbon dioxide reactant for resource utilization thereof.

3. The system of claim 2, wherein the mixer is configured to generate the basic alkali mixed solution by mixing a basic alkaline solution supplied from a basic alkaline solution storage with water supplied from a water source.

4. The system of claim 3, wherein the basic alkaline solution and water are mixed in a ratio of 1:1 to 1:5.

5. The system of claim 2, wherein an average pH of the basic alkali mixed solution is pH 12 to pH 13.5.

6. The system of claim 1, wherein the basic alkali mixed solution comprises:
at least one oxide selected from a group consisting of SiO₂, Al₂O₃, Fe₂O₃, TiO₂, MgO, MnO, CaO, Na₂O, K₂O, and P₂O₃;
at least one metal selected from a group consisting of Li, Cr, Co, Ni, Cu, Zn, Ga, Sr, Cd, and Pb;
a crystallized synthetic zeolite manufactured from an alumina-based material, a silica-based material, and sodium hydroxide; and
at least one liquid compound selected from a group consisting of sodium tetraborate (Na₂B₄O₇·10H₂O), sodium hydroxide (NaOH), sodium silicate (Na₂SiO₃), potassium hydroxide (KOH), and hydrogen peroxide (H₂O₂).

7. The system of claim 2, wherein the basic alkali mixed solution is input by being adjusted through a valve in the mixer when a level of the basic alkali mixed solution in the absorption column is lowered to less than 90%, and inputting of the basic alkali mixed solution is stopped and, at the same time, a basic alkaline solution and water are mixed until a pH of the basic alkali mixed solution becomes pH 12 to pH 13.5 when the level of the basic alkali mixed solution becomes 100%.

8. The system of claim 2, wherein the bubbler is configured to form exhaust gas micro bubbles by using the exhaust gas.

9. The system of claim 1, wherein the hydrogen generator comprises a water electrolysis cell configured to generate hydrogen gas by electrolysis using sodium carbonate (Na₂CO₃) or sodium bicarbonate (NaHCO₃) as an electrolyte, sodium carbonate (Na₂CO₃) or sodium bicarbonate (NaHCO₃) being the carbon dioxide reactant separated from the reactor.

10. The system of claim 1, wherein the cyclones are formed such that the cyclone which is positioned at an uppermost stage and to which the cement raw material is supplied and the cyclone which is positioned at a lowermost stage and to which the exhaust gas respectively discharged from the calciner and the kiln is supplied are arranged at two stages in series in the vertical direction.

11. The system of claim 1, wherein the carbon dioxide reactant comprises sodium carbonate (Na₂CO₃) or sodium bicarbonate (NaHCO₃).

12. The system of claim 2, wherein the separator comprises:
a centrifuge configured to separate the waste solution and the carbon dioxide reactant containing sodium carbonate (Na₂CO₃) or sodium bicarbonate (NaHCO₃) from the reactant; and
a dehydrator formed corresponding to an inner circumference of a discharge pipe for discharging only sodium bicarbonate in the carbon dioxide reactant, the dehydrator having a surface provided with fine holes formed in a size capable of allowing carbon bicarbonate to pass therethrough.

13. The system of claim 12, wherein the dehydrator comprises:
a discharge pipe connected to an outlet of the reactor;
a separation membrane provided in a hollow of the discharge pipe and provided with a plurality of filter holes so that a carbonate solution containing carbonate powder having a particle size equal to or less than a predetermined particle size is filtered and extracted, the carbonate solution being precipitated from the reactor; and
a drying part configured to remove moisture by spraying dry air to the carbonate solution that has passed through the separation membrane, thereby acquiring carbonate powder.

14. The system of claim 13, wherein vibration is continuously or selectively applied to the separation membrane, thereby detaching carbonate powder trapped in the filter holes from the filter holes or preventing carbonate powder from being trapped in the filter holes.

15. The system of claim 1, wherein a clinker cooler as a cooler for cooling a cement clinker acquired by burning the cement raw material is further mounted on the kiln.

16. The system of claim 15, wherein a cement mill for pulverizing the cement clinker which is a half-finished cement product and which is cooled by the clinker cooler so as to process the cement clinker into cement powder is further mounted on the clinker cooler.
